# EUROPEAN PATENT SPECIFICATION

(11) **EP 2 773 186 B1**
(45) Date of publication and mention of the grant of the patent: **07.06.2017**
(21) Application number: 12798432.6
(22) Date of filing: 31.10.2012
(51) Int. Cl.: A01K 1/01, A01K 1/015

(54) **ANIMAL ACCOMMODATION WITH MANURE PIT**
TIERSTALL MIT EINER DÜNGERGRUBE
LOGEMENT D'ANIMAUX À PUITS DE FUMIER

(30) Priority: 31.10.2011 NL 2007691
(43) Date of publication of application: 10.09.2014
(73) Proprietor: Weelink Participaties B.V., 9756 AJ Glimmen (NL)
(72) Inventor: WEELINK, Johannes Martinus Willibrordus, 9756 AJ Glimmen (NL)
(74) Representative: Mink-Lindenburg, Charlotte Hildegard
(86) International application number: PCT/NL2012/050757
(87) International publication number: WO 2013/066171

(56) References cited:
- EP-A1- 0 850 561
- DE-A1- 1 507 058
- DE-A1- 19 741 986
- FR-A1- 2 721 226
- FR-A1- 2 958 114
- US-A1- 2004 149 235

## Description

### BACKGROUND OF THE INVENTION

The invention relates to an animal accommodation with a manure pit, see e.g. document DE-A-1507058. When urea from urine comes into contact with the enzyme urease found in faeces of animals, ammonia is formed. The forming of ammonia can be reduced on the one hand by separating urine and faeces of animals from each other and on the other by treating the urine and/or faeces with for instance an acid.

An animal accommodation adapted to limit ammonia emission is known from European patent application EP 0 850 561 A1 which describes a system with floor grating and a manure collection space placed thereunder, a belt conveyor for solid manure parts which bridges the manure collection space and is liquid-permeable, and a liquid channel for discharging liquid manure parts, wherein an acid is added to the liquid manure parts in order to reduce the forming of ammonia. A drawback of the known animal accommodation is that the belt conveyor must cover a large surface area and must be moved frequently in order to bring about a good and timely separation of solid and liquid manure parts.

The known system further comprises a floor grating on which the livestock can lie and/or stand and which comprises a number of openings for passage of the manure and urine to a collection space located thereunder.

It is an object of the invention to provide an animal accommodation with manure pit for the purpose of reducing ammonia emission which at least partially obviates at least one of the above stated drawbacks.

### SUMMARY OF THE INVENTION

The invention as defined in claim 1 provides an animal accommodation with a manure pit, wherein the manure pit comprises a floor and walls standing from the floor, wherein at least one of the walls is provided with a throughfeed for carrying manure out of the manure pit, wherein the throughfeed has an underside placed at a distance from the floor, wherein the manure pit is adapted to hold in the manure pit a layer of liquid which covers the floor and extends at least to a predetermined level, wherein the manure pit further comprises a drive device for driving a flow in the layer of liquid in the manure pit, and a discharge device for discharging to the throughfeed manure parts suspended and/or floating in the liquid.

When the liquid manure parts are mixed with the layer of liquid, the concentration of urea is considerably diluted so that ammonia formation is delayed considerably. The layer of liquid comprises sufficient liquid so that a flow thereof can be initiated and the urea can be spread over the whole layer of liquid. The layer of liquid, which thus acts as a transport liquid for the solid and liquid manure parts, preferably covers substantially the whole floor. The liquid preferably consists substantially of water, optionally provided with additives such as pH-reducing means and/or calcium salts for the purpose of increasing respectively the acidity and the density of the liquid.

In an embodiment the drive device comprises a fluid conduit provided with perforations which debouch into the manure pit under the predetermined level. Air and/or liquid carried through the perforations into the liquid layer under a light overpressure relative to the liquid layer thus drives a flow of the liquid in the liquid layer, preferably in a flow direction away from the holes. It is important here that the drive device disturbs the liquid layer so little that, while the manure parts floating in the liquid layer are driven in the flow direction, they are substantially not immersed further in the liquid under the influence of the flow. The fluid conduit is preferably placed on or at the floor of the manure pit so that it is attached substantially fixedly to the manure pit, and most of the turbulence caused in the liquid layer by the drive device is as far away as possible from the surface of the liquid layer.

In an embodiment the drive device is adapted to circulate the liquid in the manure pit. The solid manure parts are thus moved with the liquid flow to the throughfeed, at least during part of the liquid circulation. The animal accommodation further comprises a liquid feed for supplying liquid to the manure pit and means for determining whether or not the layer of liquid in the manure pit extends substantially up to the predetermined level, wherein the liquid feed is adapted to supply liquid to the manure pit when it has been determined that the liquid level substantially does not extend up to the predetermined level. When a part of the solid and liquid manure parts leaves the manure pit together with the liquid via the throughfeed, the liquid is replenished so that the liquid once again extends to the predetermined level.

In an embodiment the predetermined level extends substantially to the underside of the throughfeed, preferably to a position just a little below the underside of the throughfeed. That part of the floating manure close to the throughfeed and situated above the liquid level can thus move over the underside of the throughfeed and out of the manure pit.

In an embodiment the predetermined level is sufficient to enable a flow of the liquid through substantially the whole manure pit, wherein the predetermined level is preferably at a distance of at least 20 cm from the floor. The manure can thus be carried from all parts of the manure pit to the throughfeed by the liquid flow.

In an embodiment the discharge device comprises a baffle which runs toward the throughfeed and along which the solid manure parts are transported in the direction of the throughfeed under the influence of the liquid flow. The discharge device is preferably provided with perforations allowing passage of the liquid. The solid manure parts, such as faeces, are thus carried to the throughfeed, while the liquid with the liquid manure parts therein, such as slurry, passes at least partially through the perforations in the discharge device.

In an embodiment the discharge device is adapted to discharge solid manure parts at least substantially continuously from the liquid. The discharged manure can thus no longer form ammonia in the manure pit.

In an embodiment the discharge device comprises a drum or blade which is placed in the manure pit and has a surface provided with liquid-permeable perforations, wherein the drum or blade is adapted to move from a position in which the surface lies at least partially below the liquid level to a position in which the surface lies at least partially above the liquid level in order to displace the suspended and/or floating manure via the surface to a level above the liquid level. When the solid manure parts have been carried above the liquid level, they can move, for instance under the influence of gravitational force, along a slide chute to the throughfeed.

In an embodiment the drum or blade is adapted to rotate about a substantially horizontal axis.

The drum is preferably placed transversely of the throughfeed or transversely of the flow direction of the liquid and partially in the liquid layer on an upstream side of the throughfeed, and is adapted to rotate such that an upper side of the drum moves in the flow direction. The drum preferably bridges a distance between the wall provided with the throughfeed and a wall opposite thereto. In an alternative embodiment the drum can however also be placed on at least an outer end at a distance from all walls of the manure pit.

In an embodiment the discharge device comprises a baffle which is provided with perforations and which extends obliquely in lengthwise direction relative to the flow direction of the liquid, wherein the baffle comprises a first distal outer end placed substantially abutting the throughfeed and a second distal outer end placed upstream relative to the first distal outer end, wherein the baffle has a lower edge below the predetermined level and an upper edge above the predetermined level. The first distal outer end is preferably placed just abutting against and downstream of the throughfeed so that solid manure parts are transported along the baffle into the throughfeed under the influence of the liquid flow.

In an embodiment the second distal outer end abuts against a wall lying opposite the throughfeed. Solid manure parts cannot therefore pass the baffle and are guided to the throughfeed, so preventing a solid manure part passing the baffle one or more times. The solid manure parts thus remain for a substantially maximum circulation time period in the liquid before they reach the discharge device.

In an embodiment the lower edge of the baffle is placed upstream of the upper edge of the baffle. Manure parts which move against the baffle in the flow direction are thus also moved in a direction above the predetermined level.

In an embodiment the animal accommodation further comprises dosing means for adding a pH-reducing substance to the liquid, whereby the possibly remaining ammonia emission is reduced. The dosing means can further be used to add calcium salts to the liquid, whereby the density of the liquid in the manure pit is increased so that mixing of urine and the liquid is reduced and the urine accumulates substantially at the liquid surface. Mixing the liquid manure parts with calcium salts here improves the manure value of the liquid manure parts. There is also provided a manure separator comprising a housing with a conical inner wall and a rotatable conical auger placed therein, wherein the conical inner wall is provided with perforations allowing passage of liquid manure parts and the conical auger is adapted during rotation to transport solid manure parts from the inlet opening to an outlet opening, wherein the inlet opening has a larger diameter than the outlet opening, and the conical auger tapers toward the outlet opening. Owing to the conical form of the wall provided with perforations and the auger the pressure exerted on the solid manure parts in the manure separator remains substantially constant as the solid manure parts are moved in the direction of the outlet opening and are compacted. The further separation of solid manure parts and liquid manure parts reduces the forming of ammonia here.

In known accommodation systems the solid and liquid manure parts are usually further separated from each other by means of a manure separator which comprises a housing with a cylindrical wall provided with perforations and an auger placed therein. Manure consisting of both solid and liquid parts, for instance from substantially solid faeces and slurry, is carried via an inlet opening into the manure separator, after which the liquid parts are carried outside the wall through the perforations when the auger is rotated, and the solid manure parts are compacted inside the wall and carried to an outlet opening of the manure separator. Forming of ammonia is further limited by this further separation of liquid manure parts from solid manure parts. A drawback of this known manure separator is that, the closer the solid manure parts come to the outlet opening, the less they are intermixed with liquid manure parts so that the pressure exerted by the auger on the solid manure parts is not constant during transport of the manure mixture from the inlet opening to the outlet opening. The manure separator forms part of an animal accommodation as described above, wherein the inlet opening of the manure separator is connected to the throughfeed of the manure pit. The manure separator is preferably placed in the animal accommodation at the level of the manure pit so that the manure separator does not take up any walking and/or lying area in the animal accommodation. There is also provided a floor grating for an animal accommodation with a manure pit located thereunder, wherein the floor grating forms a walking and/or lying surface for livestock and has an open area of 30% or more of the walking and/or lying surface. The relatively large open area of the floor grating ensures that manure can fall easily into the manure pit. Owing to the better removal of urine the floor remains drier so that the legs of the animals are better protected from moisture. There also remains relatively little manure on the floor grating as a result of the large open area of floor grating, so that intermixing of solid manure parts with urine on the floor grating, and the associated formation of ammonia, is also limited considerably. Particularly when applied in an animal accommodation as described above, the forming of ammonia is reduced in both the manure pit and on the floor grating.

In known floor gratings the surface taken up by the openings in the floor grating is usually limited as far as possible so as to limit emissions of ammonia from the collection space located thereunder. A drawback hereof is however that solid manure parts remain lying for a longer time on the support surface of the floor grating where they can mix with urine, so that the forming of ammonia takes place on the floor grating. In order to reduce ammonia formation the solid manure parts are preferably separated from the liquid manure parts within 24 hours.

In an embodiment the floor grating comprises a number of girders supported parallel to each other and with spaces therebetween, wherein each girder has substantially a T-profile which is supported in upright position, wherein the upper surface of flanges of the mutually adjacent girders supports the walking and/or lying surface. The girders are preferably metal or steel girders and enable a light and simple construction.

In an embodiment the girders each have a substantially equal width and the girders are placed at a mutual distance from each other which is at least 30% of this width, preferably at least 40% of this width, most preferably at least 60% of this width.

In embodiment the girders are further provided with a number of perforated conduits arranged in the gussets of the T-profiles, wherein these perforated conduits are adapted to be connected to an air feed for the supply of heated air. Warm air can thus be fed to the accommodation in order to increase the comfort of the animals in the accommodation and to improve the air circulation in the accommodation.

In an embodiment the flanges are provided with a layer of rubber or rubber-like material, preferably a layer of vulcanized rubber. The rubber provides a soft resilient surface for the livestock to stand on, so causing less wear to the legs of the animals. The rubber also yields and springs back when the livestock walk over it, wherein possible soiling on the floor surface co-displaces and thus releases from the rubber and can drop through the openings in the floor grating into a manure pit. In an embodiment the layer of rubber has a thickness of at least 1 cm, which results in a good resilience of the rubber. The layer of rubber preferably has a thickness of between 2 and 3 cm, most preferably of at least 3 cm.

In an embodiment the flanges are provided on an upper side with an attaching profile for improving attachment of the layer of rubber to the T-profiles, wherein the attaching profile is substantially wholly enclosed by the upper side of the flange and the layer of rubber. This provides for a firm attachment of the rubber to the girders, while the walking and/or lying surface formed by a girder is thus completely covered with rubber so that it can be cleaned properly by livestock walking over it. In addition, the layer of rubber prevents damage to the legs of the animals.

In an embodiment the attaching profile comprises one or more edges standing from the upper side of the flanges. The edges can be straight edges, but for instance also zigzag edges and/or edges with protrusions.

In an embodiment the attaching profile is provided with through-openings. Liquid rubber can thus flow through the through-openings during manufacture of the girders and adhere to multiple sides of the attaching profile.

In an embodiment the attaching profile has an inner side directed toward the upper side of the flange and an opposite outer side, wherein the through-openings extend from the inner side to the outer side of the attaching profile.

In an embodiment the attaching profile comprises a U-profile fixed with the outer ends of its legs to the upper side of the flange, wherein at least one of the legs and/or the upper side of the U-profile are provided with a series of recesses. The space between the U-profile and the flange is preferably filled here by the layer of rubber.

In an embodiment the legs of the U-profile are fixed to the flange at a distance from longitudinal edges of the upper side of the flange so that the layer of rubber can cover the U-profile on either side of the legs without protruding beyond the width of the flange. There is also provided an animal accommodation with a manure pit, wherein the manure pit comprises a floor and walls standing from the floor, further comprising a floor grating as described above placed at a distance above the floor of the manure pit. There is also provided an animal accommodation with a manure pit, wherein the manure pit comprises a floor and walls standing from the floor, further comprising support legs, or supporting devices, placed between the floor of the manure pit and the floor grating for the purpose of supporting the floor grating substantially on the floor of the manure pit. The support legs enable the use of light and/or thin floor gratings, while the floor gratings remain suitable for bearing the weight of the livestock, in particular cows, over spans from one wall of the manure pit to another wall of the manure pit. There is also provided an animal accommodation provided with one or more further manure pits connected to a liquid feed for covering the floors with the layer of liquid, wherein the manure pits are in flowing liquid connection with each other. The further manure pits thus form a liquid circuit in which the solid manure parts preferably reach a discharge device at least once every four hours.

The aspects and measures specified in this description and/or shown in the drawings of this application can, where possible, also be applied separately of each other. These separate aspects, such as the manure pit having a liquid circulation therein for transport of manure parts, and a conical manure separator, a floor grating with an open surface area which is at least 30% of the closed surface area, a floor grating with a rubber top layer of at least 1 cm, and support of a floor grating on a floor surface of a manure pit by means of support legs, and other aspects can be the subject of divisional patent applications relating thereto.

### BRIEF DESCRIPTION OF THE DRAWINGS

The invention will be elucidated on the basis of a number of exemplary embodiments shown in the accompanying drawings, in which:
figure 1A shows a schematic cross-sectional view of a manure pit for an animal accommodation according to the invention,
figure 1B shows a schematic top view of a part of the animal accommodation of figure 1A,
figure 1C shows a cross-sectional view of the discharge device of figure 1B along line IC-IC,
figure 1D is a perspective view of the same discharge device,
figure 1E is a schematic cross-sectional view of a manure pit for an animal accommodation according to invention, showing the discharge device,
figure 2A is a schematic cross-sectional view of a manure pit for an animal accommodation according to the invention provided with drive means for driving a liquid flow in the manure pit,
figure 2B is a schematic top view of the manure pit of figure 2A,
figure 2C is a schematic top view of an animal accommodation with a manure pit with two liquid flows therein,
figure 3A is a top view of a part of an animal accommodation with manure pit, provided with a floor grating for animals,
figure 3B is a schematic cross-sectional view through line IIIB-IIIB in figure 3A,
figure 3C is a schematic cross-sectional view of the animal accommodation of figure 3A,
figures 4A-4C show respectively a cross-sectional view, a cross-sectional view and a top view of a girder of a floor grating,
figure 5 is a perspective view of a manure separator.

### DETAILED DESCRIPTION OF THE DRAWINGS

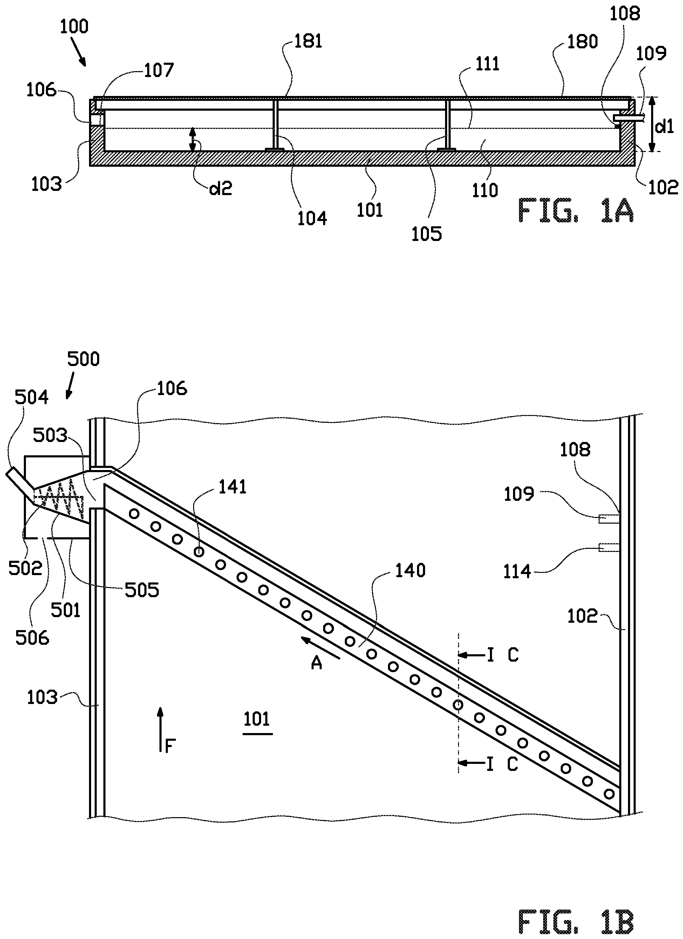

Figure 1A is a schematic cross-sectional view of a manure pit for an animal accommodation 100 according to invention. Manure pit 100 comprises a floor 101 and side walls 102, 103 for collecting both faeces and urine from livestock present on a floor grating 180 supported by support legs 104, 105 and walls 102, 103. Floor grating 180 has an upper surface 181 situated a distance d1 of 40 cm from the floor 101 of the manure pit, so that livestock on the floor grating are about 40 cm above floor 101 of the manure pit. Wall 103 is provided with a throughfeed 106, which throughfeed has an underside, or overflow edge, 107 placed a distance from floor 101. Present in the manure pit is a layer of liquid 110 which covers substantially the whole floor of the manure pit and the surface 111 of which extends up to a predetermined level.

In the shown embodiment the predetermined level corresponds substantially to the lower edge 107 of throughfeed opening 106 so that manure parts lying higher than this edge can be transported out of manure pit 100 through throughfeed opening 106. In order to ensure that there is always sufficiently liquid 110 in manure pit 100, manure pit 100 is connected to a closable liquid feed 109 with which liquid, for instance water from a ditch, can be supplied to manure pit 100. An acid is preferably added to the liquid in order to further reduce forming of ammonia by the manure parts in liquid 110.

The manure pit is further provided with means 108 for determining whether the liquid level 111 in the manure pit extends substantially to the predetermined level, in this case to just below the underside 107 of throughfeed 106. Liquid feed 109 is adapted to supply no liquid when it has been determined that liquid level 111 extends substantially up to the predetermined level. When liquid level 111 lies below the predetermined level, in this case a predetermined distance below the underside 107 of throughfeed 106, liquid is then supplied to the manure pit via the liquid feed so that the manure pit is generally filled as far as the underside 107 of throughfeed 106 with liquid and a mixture of urine and faeces. In a simple embodiment the means 108 comprise a float which is coupled to a shut-off valve for the purpose of opening feed 109 when the level of liquid 110 becomes too low.

Urine from the livestock is immediately taken up into the liquid. Faeces enter the liquid, after which the faeces remain suspended and/or float for at least some time in the liquid. The floating parts of the faeces, i.e. of the solid manure parts, are thus at least partially above the underside 107 of throughfeed 106.

Figure 1B shows a partial top view of the manure pit for an animal accommodation of figure 1A. Floor 101 and walls 102, 103 form part of a manure pit 100 provided with a discharge device 140 for discharging solid manure parts to throughfeed 106. Discharge device 140 abuts on a first side against throughfeed 106 in wall 103 and extends obliquely toward opposite wall 102 counter to the flow direction F. The discharge device is provided along its length with perforations 141 through which liquid can flow, but which substantially do not allow passage of solid manure parts.

Although the manure pit is not shown in its entirety here for reasons of simplicity, the layer of liquid 110 in the shown part of the manure pit preferably forms part of a circulating liquid circuit, wherein at least a part of the liquid flows repeatedly along and/or through the discharge device. The flow speed of the liquid is preferably set such that the liquid with floating and/or suspended solid manure parts circulates 3 to 5 times every 24 hours, so that floating and/or suspended solid manure parts generally circulate for no longer than four hours in the liquid, which also contains the urine, before they reach discharge device 140.

When floating and/or suspended solid manure parts reach discharge device 140 in the flow direction F, they are subsequently moved under the influence of the liquid flow along the discharge device in the direction A toward and through the throughfeed to a manure separator 500, while the mixture of liquid and liquid manure parts flows in flow direction F through perforations 141 in discharge device 140.

The manure pit further comprises a feed 114 for supplying a pH-reducing substance and/or salts to the liquid in order to respectively reduce ammonia formation and increase the density of the liquid.

Manure parts which have passed through throughfeed 106 enter a manure separator 500 which comprises a housing with a conical perforated wall 501 and a conical auger 502 placed inside this wall and adapted during rotation to carry solid manure parts from inlet opening 503 to outlet opening 504 of the manure separator. During throughfeed of the solid manure parts the liquid manure parts are pressed through the perforations in wall 501 and enter collecting tank 505 which is provided with an opening 506. The solid manure parts leave outlet opening 504 of the manure separator in compacted form.

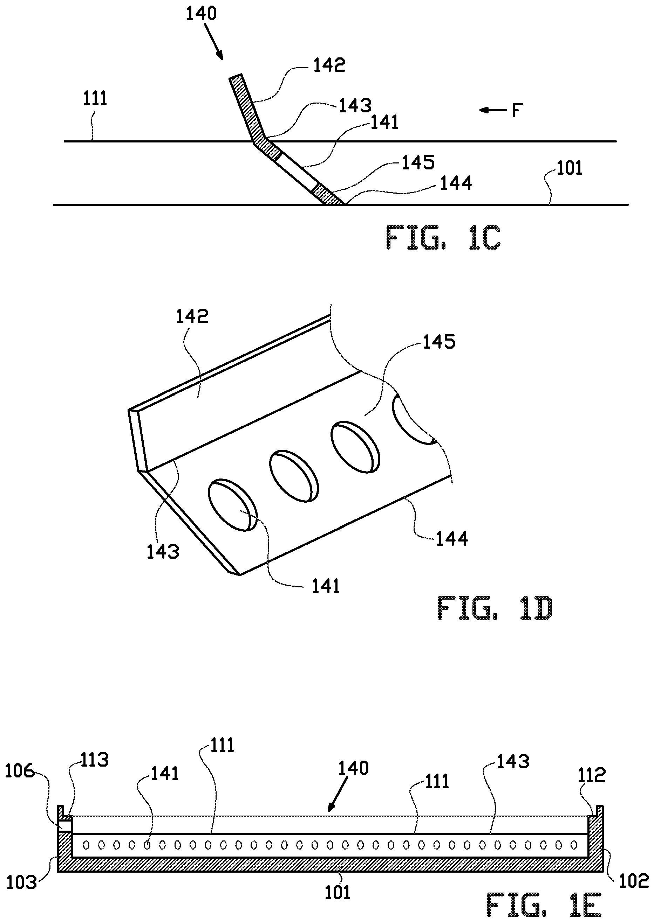

Figures 1C and 1D show respectively a view of a cross-section through line IC-IC of discharge device 140 in figure 1B and a perspective view thereof. The discharge device comprises an elongate baffle 140 with a surface which faces toward flow direction F and which extends upward in the flow direction F from an underside 144 of baffle 140. From its lower edge 144 arranged furthest upstream the baffle runs obliquely upward in flow direction F relative to floor 101 so that solid manure parts floating on or suspended in the liquid are pushed upward via the baffle to a position above the predetermined level 111.

Baffle 140 comprises a first part 145 which is provided with holes 141 for passage of the liquid, wherein the holes do not allow passage of substantially any solid manure parts. The baffle further comprises a second part 142 which does not allow passage of substantially any liquid and is placed in cross-sectional view at an angle to the first part 145. First part 145 and second part 142 are connected at an angle to each other along line 143. Second part 142 is preferably situated at least substantially above the predetermined level, in this case above the level of liquid surface 111, so that solid manure parts already at a position above the predetermined level are guided along second part 142 to the throughfeed. Solid manure parts are thus removed from the liquid and discharged to the throughfeed of the manure pit under the influence of the liquid flow.

Figure 1E shows a partial cross-section of a manure pit for an animal accommodation according to the invention, with the baffle 140 shown therein extending from the wall 103 provided with the throughfeed, wherein the baffle is placed downstream of and abutting throughfeed 106, to a wall 102 lying opposite throughfeed 106. In the shown embodiment the lower edge 144 of baffle 140 touches the floor 101 of the manure pit so that the liquid must flow through the perforations 141 in the baffle in order to pass through the baffle. In an alternative embodiment the lower edge of the baffle can be situated at least partially at a distance from floor 101 so that the throughflow of the liquid is guaranteed even if the perforations in the baffle are clogged.

Although the manure pit in the shown embodiment is substantially watertight, in an alternative embodiment the manure pit can be provided on an inner side with a watertight covering such as a watertight tarpaulin, so that the walls and floor need not be given a watertight form, nor need they connect watertightly to each other.

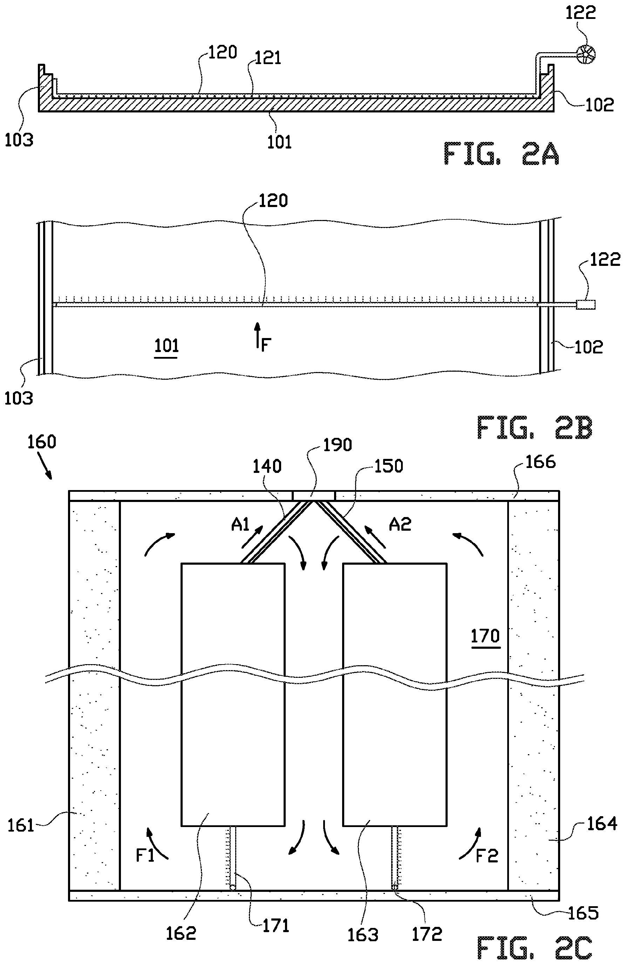

Figures 2A and 2B show a partial cross-sectional view of a manure pit for an animal accommodation according to the invention provided with drive means, and a top view thereof. The drive means comprise a fluid conduit 120 which is provided on one side with perforations 121 and which is placed at floor 101 of the manure pit. Fluid conduit 120 is connected to a fluid feed 122 and the perforations in the fluid conduit are arranged on a downstream side of the fluid conduit, preferably such that fluid flows out of the perforations in flow direction F. The fluid which flows out of the perforations thus initiates a slow flow of the liquid. In the shown embodiment fluid feed 122 comprises a compressed air feed 122 for supplying air under a light overpressure to the perforated fluid conduit, although in an alternative embodiment the fluid feed can comprise a liquid feed for supplying to the perforated fluid conduit liquid which is under a slight overpressure relative to the layer of liquid in the manure pit. The use of such a drive device to cause flow of the liquid has the advantage that the liquid is not greatly disturbed, so that particularly the solid manure parts floating on the top of the liquid are disturbed as little as possible. Because the liquid in the pit passes through the discharge device several times a day as a result of the driving, the solid manure parts are discharged, optionally together with the added urine, substantially before ammonia is formed due to intermixing of the urea from the urine with the enzyme urease from the faeces of the animals.

Figure 2C shows a view of an animal accommodation 160 according to the invention, wherein a complete liquid circuit is shown. Animal accommodation 160 comprises a floor 170 and concrete parts 161, 162, 163, 164, 165 and 166, wherein concrete parts 161, 166, 164 and 165 together form a peripheral boundary for liquid. Concrete parts 161, 162, 163 and 164 form lying and/or standing locations for the livestock on which for instance cubicles can be placed. Although not shown, the animal accommodation is provided with a floor grating which extends from wall 165 to wall 166 and which is provided with cross beams which are placed transversely of the floor grating and which support the floor grating, and which are in turn supported on floor 170 of the manure pit by means of support legs.

Wall 166 is provided with a throughfeed 190 with an underside at a predetermined distance from floor 170 of the manure pit. Floor 170 and walls standing therefrom formed by concrete parts 161, 162, 163, 164, 165 and 166 are adapted to hold a layer of liquid inside them, wherein the layer of liquid extends up to the predetermined level. Drive devices 171 and 172 are placed on floor 170 and adapted to initiate a flow in the layer of liquid in respective directions F1 and F2 so that two liquid circuits are created. Arranged in each liquid circuit is a discharge device 140, 150, in this case in the form of baffles as described above placed obliquely of the respective flow directions of liquid circuits F1 and F2, wherein the baffles have a part extending below the liquid level and provided with perforations for passage of liquid, and another part extending substantially above the liquid level and comprising substantially no perforations. Floating and/or suspended solid parts are thus guided along lengthwise directions A1 and A2 of the baffles to a single throughfeed 190.

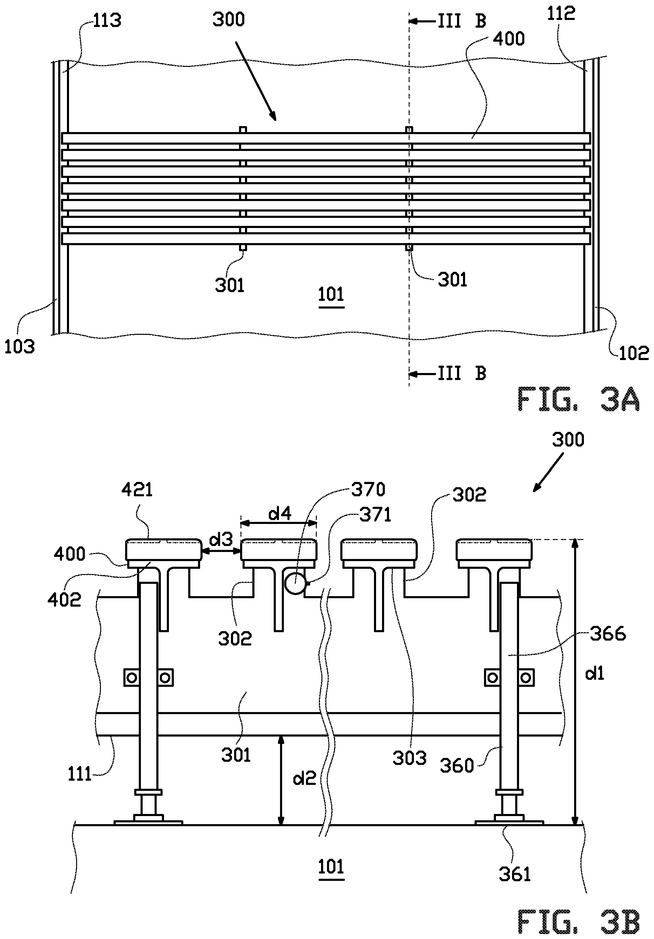

Figures 3A and 3B show respectively a top view of a part of an animal accommodation with manure pit according to the invention and a side view along line IIIB-IIIB. The animal accommodation comprises a floor grating 300 placed a distance above floor 101 of the manure pit and a walking and/or lying surface for livestock. Urine and manure from the livestock drop through the floor grating into the manure pit. Floor grating 300 comprises a number of steel girders supported parallel to each other, wherein each girder 400 has substantially a T-profile which is supported in upright position and wherein an upper surface of flanges 402 of the mutually adjacent girders supports the walking and/or lying surface 421. Girders 400 extend substantially between two opposite walls 103, 102 and abut against respective edges 113 and 112 of these walls. Girders 400 are further supported by cross beams 301 extending substantially transversely of the lengthwise direction of the girders. Cross beams 301 have an underside lying above the predetermined level, wherein the predetermined level is in this case defined by the liquid level 111 of the layer of liquid in the manure pit. In the shown example the distance between the underside of the cross beams and the predetermined level is more than 10 cm, so that solid manure parts floating on liquid surface 111 can float under cross beams 301 without coming into contact therewith.

The width of the intermediate space d3 between the girders and the width of the walking and/or lying surface of the girders d4 has a ratio of 40:60, although in an embodiment a ratio from 30:70 is also possible. Owing to the relatively large open surface area of the floor grating manure can drop easily to the manure pit so that relatively little manure is left behind on the floor grating. Fewer solid manure parts mixed with urine thus also remain on the floor grating, which limits the ammonia emission from the floor grating. In addition, the floor grating remains relatively dry, this enhancing the hoof or leg condition of the livestock. In order to further increase the comfort of the livestock, there is arranged in a number of the gussets of the T-profile an air conduit 370 with perforations 371 from which heated air can be blown. The heated air rises and warms the animals, substantially without heating the part of the manure pit located under air conduit 370.

In a floor grating for cows the girders are preferably 5 cm wide, with 3 cm of intermediate space between two mutually adjacent girders. A cow thus stands substantially with each leg on two girders. In order to achieve a similar effect, floor gratings for pigs and goats preferably have girders with a width of 3 cm, with 2 cm of intermediate space between two mutually adjacent girders.

Owing to the use of steel girders, the girders can be given a relatively thin form. In order to support the weight of the livestock on the floor grating, the floor grating is supported on the floor of the manure pit by means of support legs 360 which are attached to cross beams 301. The support tube 360 is fastened on an upper side with a bolt connection to a cross beam 301 which supports different girders 400 of the floor grating on upright edges 302 of the cross beam.

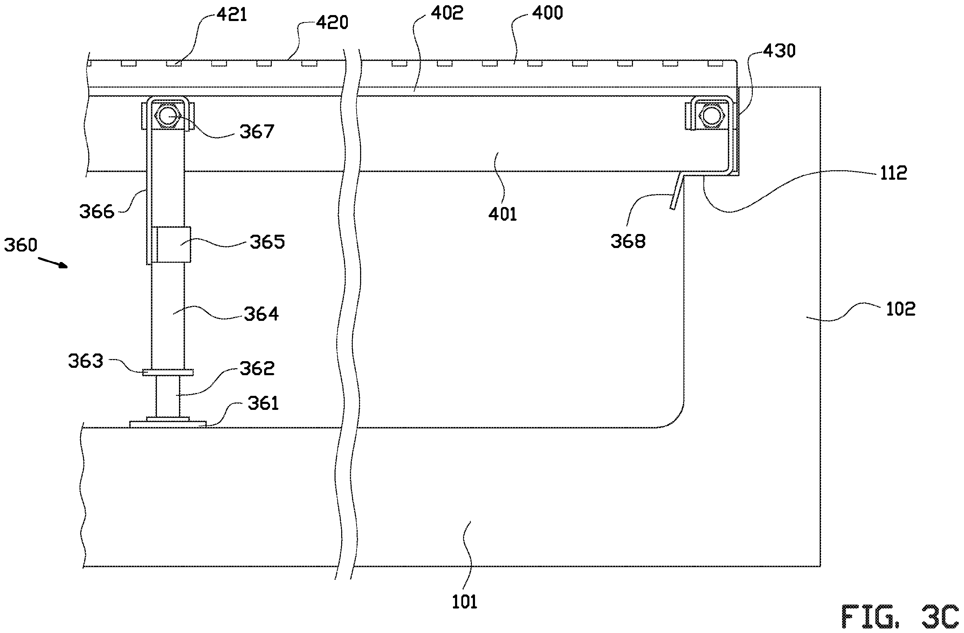

In the alternative embodiment as shown in figure 3C the support legs 366 are fixed to the girders 400 of the floor grating.

Figure 3C shows in more detail how a floor grating 400 is partially supported on a floor of a manure pit by means of a support leg. At a distal outer end 430 the floor grating supports on an iron wall profile 368 on edge 112 of concrete wall 102 of the manure pit. The floor grating extends to another wall (not shown) of the manure pit and there supports on a similar iron wall profile. Between the two walls the floor grating is supported on floor 101 of the manure pit by means of one or more support legs 360. Support leg 360 comprises a base 361 which rests on floor 101 of the manure pit. The base comprises an upright bolt 362 which is provided with a screw thread and which is at least partially inserted into an at least partially hollow support tube 366. The extent to which bolt 362 is inserted into the support tube can be set by rotating a nut 363 on the underside of the support tube. Owing to the use of support legs supporting the floor grating on the floor of the manure pit the floor grating can be given a light construction and still span the distance between two mutually opposite walls.

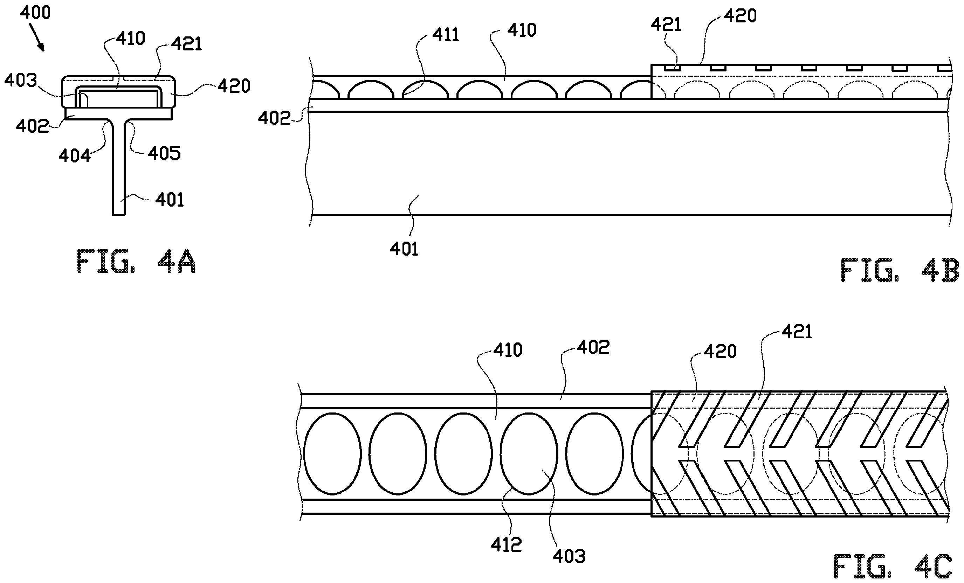

Figures 4A-4C show a front view, a side view and a top view of a girder 400 as used in a floor grating according to the invention. The girder 400 of figure 4A has a T-profile with a flange 402, wherein the flange has an upper surface 410 which supports a walking and/or lying surface of girder 100 for the livestock. The girder has two gussets 404, 405 in which a perforated air conduit can be arranged in the same lengthwise direction as the girder. The girder is provided on an upper side with a layer of rubber 420, wherein the layer of rubber extends as far as the upper surface 403 of the flange and has a thickness of at least 2 cm. In order to bring about better attachment of the rubber to the girder, the girder is provided with a metal attaching profile 410 having a U-shaped cross-section.

Figures 4B and 4C show a partially cut-away side and top view of a girder. It can be seen that the legs of the U-shaped attaching profile 410 are situated a distance away from the longitudinal edges of flange 402 and are provided with openings 411, and that the upper side of the attaching profile is provided with further openings 412. When the layer of rubber is arranged on the girder, the rubber can thus flow through openings 411 and further openings 412, while the cured rubber is held in place by attaching profile 410. The layer of rubber 420 is provided with grooves 421 which form a profile in the rubber in order to prevent the livestock slipping.

When animals walk on the rubber, the layer of rubber 420 yields and springs back, wherein manure lying on the layer of rubber is displaced along with the rubber and can drop into the manure pit. The mobility of the rubber layer ensures that little manure remains on the floor grating and prevents the manure becoming caked onto the floor grating.

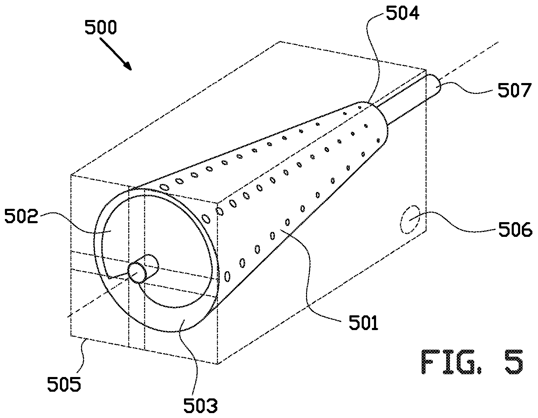

Figure 5 shows a manure separator used in the invention. The manure separator 500 comprises a housing with a conical wall 501 which is provided with holes for passage of liquid but which substantially does not allow passage of solid manure parts. Placed in housing 501 is a conical auger 502 which comprises a drive shaft 507 and which, when rotated, transports at least the solid parts of a manure mixture consisting of solid parts and liquid parts in the direction of outlet opening 503, wherein the solid parts are compacted. Because auger 502 gradually removes liquid from the mixture via the holes in conical wall 501 during rotation, more pressure is required to compact the solid manure parts as they approach closer to the outlet opening. The liquid manure parts which pass through the perforations of the conical wall are collected in a collecting tank 505 which is provided with a discharge 506. Owing to the conical form of both the housing 501 and the auger 502 received therein the pressure on the solid manure parts in the manure separator can remain substantially constant from inlet opening 503 of the manure separator to the outlet opening of the manure separator.

The manure separator is preferably placed at the manure pit below the level of the floor grating of the animal accommodation, with the inlet opening of the manure separator connected to the throughfeed of the manure pit, and is adapted to operate regularly for short periods of time.

In summary, the invention relates to an animal accommodation with a manure pit adapted to reduce ammonia emission. In an embodiment the manure pit comprises for this purpose a layer of liquid, such as water, in which manure parts circulate until they reach a throughfeed in the manure pit. In an embodiment the animal accommodation comprises a floor grating with an open surface area of at least 30% so that manure drops easily through the floor grating. In an embodiment the floor grating is provided on an upper side with a rubber-like or rubber layer, whereby the floor grating can be cleaned by the livestock walking over it. The floor grating is preferably supported on the floor of the manure pit by means of support legs. The invention also relates to an improved manure separator.

The above description is included for the purpose of illustrating the operation of preferred embodiments of the invention and is not intended to limit the scope of protection of the invention. Making use of the above elucidation, many variations falling within the scope of protection of the present invention as defined in the appended claims will be evident to a skilled person.

## Claims

1. Animal accommodation (100,160) with a manure pit for manure containing liquid and solid manure parts, wherein the manure pit comprises a floor (101, 170) and walls (102, 103, 161, 162, 163, 164, 165 and 166) standing from the floor (101, 170), wherein at least one of the walls (102, 103, 161, 162, 163, 164, 165 and 166) is provided with a throughfeed (106, 190) for carrying manure out of the manure pit, wherein the throughfeed (106, 190) has an underside placed at a distance from the floor (101, 170), **characterized in that** the manure pit is adapted to hold in the manure pit a layer of transport liquid (110) for transporting the solid and liquid manure parts, in which the solid manure parts float and which transport liquid (110) dilutes the liquid manure parts, which transport liquid (110) covers the floor (101, 170) and extends at least to a predetermined level (111), wherein the manure pit further comprises a drive device (171, 172) for driving a flow in the layer of transport liquid (110) in the manure pit, and a discharge device (140) for discharging to the throughfeed (106, 190) manure parts suspended and/or floating in the transport liquid (110), further comprising a liquid feed (109) for supplying transport liquid (110) to the manure pit and means for determining whether or not the layer of transport liquid (110) in the manure pit extends substantially up to the predetermined level (111), wherein the liquid feed (109) is adapted to supply transport liquid (110) to the manure pit when it has been determined that the transport liquid level (111) substantially does not extend up to the predetermined level (111).

2. Animal accommodation (100,160) as claimed in claim 1, wherein the drive device (171, 172) comprises a transport fluid conduit (120) provided with perforations which debouch into the manure pit under the predetermined level (111).

3. Animal accommodation (100,160) as claimed in claim 1 or 2, wherein the drive device (171, 172) is adapted to circulate the transport liquid in the manure pit.

4. Animal accommodation (100,160) as claimed in any of the foregoing claims, wherein the predetermined level (111) extends substantially to the underside of the throughfeed (106, 190).

5. Animal accommodation (100,160) as claimed in any of the foregoing claims, wherein the predetermined level (111) is sufficient to enable a flow of the transport liquid through substantially the whole manure pit.

6. Animal accommodation (100,160) as claimed in any of the foregoing claims, wherein the discharge device (140) is provided with perforations allowing passage of the transport liquid.

7. Animal accommodation (100,160) as claimed in claim 6, wherein the discharge device (140) comprises a drum or blade which is placed in the manure pit and has a surface provided with liquid-permeable perforations, wherein the drum or blade is adapted to move from a position in which the surface lies at least partially below the transport liquid level (111) to a position in which the surface lies at least partially above the transport liquid level (111) in order to displace the suspended and/or floating manure via the surface to a level above the transport liquid level (111).

8. Animal accommodation (100,160) as claimed in claim 7, wherein the drum or blade is adapted to rotate about a substantially horizontal axis.

9. Animal accommodation (100,160) as claimed in claim 6, wherein the discharge device (140) comprises a baffle which is provided with perforations (121, 141) and which extends obliquely in lengthwise direction relative to the flow direction of the transport liquid, wherein the baffle comprises a first distal outer end placed substantially abutting the throughfeed (106, 190) and a second distal outer end placed upstream relative to the first distal outer end, wherein the baffle has a lower edge below the predetermined level (111) and an upper edge above the predetermined level (111).

10. Animal accommodation (100,160) as claimed in claim 9, wherein the second distal outer end abuts against a wall lying opposite the throughfeed (106, 190).

11. Animal accommodation (100,160) as claimed in claim 9 or 10, wherein the lower edge of the baffle is placed upstream of the upper edge of the baffle.

12. Animal accommodation (100,160) as claimed in any of the foregoing claims, further provided with dosing means for adding a pH-reducing substance to the transport liquid.

13. Animal accommodation (100,160) as claimed in any of the claims 1-12, provided with a manure separator comprising a housing with a conical inner wall and a rotatable conical auger (502) placed therein, wherein the conical inner wall is provided with perforations allowing passage of liquid manure parts and the conical auger (502) is adapted during rotation to transport solid manure parts from the inlet opening to an outlet opening, wherein the inlet opening has a larger diameter than the outlet opening, and the conical auger (502) tapers toward the outlet opening, wherein the inlet opening of the manure separator is connected to the throughfeed (106, 190).

## Patentansprüche

1. Tierstall (100, 160) mit einer Dunggrube für Dung, der flüssige und feste Dungbestandteile enthält, wobei die Dunggrube einen Boden (101, 170) und Wände (102, 103, 161, 162, 163, 164, 165 und 166), die auf dem Boden (101, 170) stehen, umfasst, wobei zumindest eine der Wände (102, 103, 161, 162, 163, 164, 165 und 166) mit einem Durchtritt (106, 190) zum Austragen von Dung aus der Dunggrube versehen ist, wobei der Durchtritt (106, 190) eine Unterseite aufweist, die in einem Abstand vom Boden (101, 170) angeordnet ist, **dadurch gekennzeichnet, dass** die Dunggrube ausgebildet ist, um eine Schicht von Transportflüssigkeit (110) zum Transportieren der festen und flüssigen Dungbestandteile, in der die festen Dungbestandteile schwimmen und welche Transportflüssigkeit (110) die flüssige Dungbestandteile verdünnt, in der Dunggrube zu halten, welche Transportflüssigkeit (110) den Boden (101, 170) bedeckt und sich zumindest bis zu einem vorgegebenen Niveau (111) erstreckt, wobei die Dunggrube weiterhin eine Antriebsvorrichtung (171, 172) umfasst, um eine Strömung in der Schicht von Transportflüssigkeit (110) in der Dunggrube zu erzeugen, und eine Austragvorrichtung (140), um in der Transportflüssigkeit (110) suspendierte und/oder schwimmende Dungbestandteile in den Durchtritt (106, 190) ab zu fördern, und weiter umfassend einen Flüssigkeitseintritt (109) zum Zuführen von Transportflüssigkeit (110) in die Dunggrube und Mittel zum Bestimmen, ob die Schicht von Transportflüssigkeit (110) in der Dunggrube sich im Wesentlichen bis zu dem vorgegebenen Niveau (111) erstreckt oder nicht, wobei der Flüssigkeitseintritt (109) ausgebildet ist, um Transportflüssigkeit (110) in die Dunggrube einzuleiten, wenn ermittelt wurde, dass das Niveau (111) der Transportflüssigkeit sich im Wesentlichen nicht bis zu dem vorgegebenen Niveau (111) erstreckt.

2. Tierstall (100, 160) nach Anspruch 1, wobei die Antriebsvorrichtung (171, 172) eine Transportflüssigkeitsleitung (120) umfasst, die mit Perforationen versehen ist, welche unter dem vorgegebenen Niveau (111) in die Dunggrube münden.

3. Tierstall (100, 160) nach Anspruch 1 oder 2, wobei die Antriebsvorrichtung (171, 172) ausgebildet ist, um die Transportflüssigkeit in der Dunggrube zirkulieren zu lassen.

4. Tierstall (100, 160) nach einem der vorhergehenden Ansprüche, wobei das vorgegebene Niveau (111) sich um Wesentlichen bis zur Unterseite des Durchtritts (106, 190) erstreckt.

5. Tierstall (100, 160) nach einem der vorhergehenden Ansprüche, wobei das vorgegebene Niveau (111) ausreichend ist, um eine Strömung der Transportflüssigkeit durch im Wesentlichen die gesamte Dunggrube zu ermöglichen.

6. Tierstall (100, 160) nach einem der vorhergehenden Ansprüche, wobei die Austragvorrichtung (140) mit Perforationen versehen ist, die den Durchgang der Transportflüssigkeit ermöglichen.

7. Tierstall (100, 160) nach Anspruch 6, wobei die Austragvorrichtung (140) eine Trommel oder eine Klinge umfasst, die in der Dunggrube angeordnet ist und die eine Oberfläche aufweist, die mit flüssigkeitsdurchlässigen Perforationen versehen ist, wobei die Trommel oder Klinge angepasst ist, um sich von einer Position, in der die Oberfläche zumindest teilweise unterhalb des Niveaus (111) der Transportflüssigkeit liegt, zu einer Position, in der die Oberfläche zumindest teilweise oberhalb des Niveaus (111) der Transportflüssigkeit liegt, zu bewegen, um den suspendierten und/oder schwimmenden Dung über die Oberfläche bis zu einem Niveau oberhalb des Niveaus (111) der Transportflüssigkeit zu verlagern.

8. Tierstall (100, 160) nach Anspruch 7, wobei die Trommel oder Klinge ausgebildet ist, um sich um eine im Wesentlichen horizontale Achse zu drehen.

9. Tierstall (100, 160) nach Anspruch 6, wobei die Austragvorrichtung (140) ein Leitblech umfasst, das mit Perforationen (121, 141) versehen ist und das sich schräg in Längsrichtung relativ zur Strömungsrichtung der Transportflüssigkeit erstreckt, wobei das Leitblech ein erstes distales äußeres Ende, das im Wesentlichen an den Durchtritt (106, 190) anstoßend platziert ist und ein zweites distales äußeres Ende umfasst, das relativ zu dem ersten distalen äußeren Ende stromaufwärts angeordnet ist, wobei das Leitblech einen unteren Rand unterhalb des vorgegebenen Niveaus (111) und einen oberen Rand oberhalb des vorgegebenen Niveaus (111) hat.

10. Tierstall (100, 160) nach Anspruch 9, wobei das zweite distale äußere Ende an einer Wand anstößt, die gegenüber dem Durchtritt (106, 190) liegt.

11. Tierstall (100, 160) nach Anspruch 9 oder 10, wobei der untere Rand des Leitblechs stromaufwärts des oberen Randes des Leitblechs angeordnet ist.

12. Tierstall (100, 160) nach einem der vorhergehenden Ansprüche, ferner versehen mit Dosierungsmitteln zum Zufügen einer pH-reduzierenden Substanz zu der Transportflüssigkeit.

13. Tierstall (100, 160) nach einem der Ansprüche 1-12, versehen mit einem Dungseparator umfassend ein Gehäuse mit einer konischen Innenwand und einer darin angeordneten drehbaren konischen Schnecke (502), wobei die konische Innenwand mit Perforationen, die den Durchgang von flüssigen Dungbestandteilen erlauben, versehen ist und die konische Schnecke (502) ausgebildet ist, um während der Drehung feste Dungbestandteile von der Einlassöffnung zu einer Auslassöffnung zu transportieren, wobei die Einlassöffnung einen größeren Durchmesser als die Auslassöffnung aufweist und die konische Schnecke (502) zu der Auslassöffnung hin konisch zuläuft, wobei die Einlassöffnung des Dungseparators mit dem Durchtritt (106, 190) verbunden ist.

## Revendications

1. Installation pour animaux (100, 160) avec une fosse à fumier pour du fumier contenant des parties de fumier liquides et des parties de fumier solides, la fosse à fumier comprenant un plancher (101, 170) et des parois (102, 103, 161, 162, 163, 164, 165 et 166) se dressant depuis le plancher (101, 170), au moins une des parois (102, 103, 161, 162, 163, 164, 165 et 166) étant pourvue d'un passage de transfert (106, 190) pour transporter le fumier hors de la fosse à fumier, le passage de transfert (106, 190) ayant une face inférieure placée à distance du plancher (101, 170), **caractérisé en ce que** la fosse à fumier est apte à maintenir dans la fosse à fumier une couche de liquide de transport (110) pour transporter les parties de fumier liquides et solides, dans lesquelles les parties de fumier solides flottent et le liquide de transport (110) dilue les parties de fumier liquides, lequel liquide de transport (110) recouvre le plancher (101, 170) et s'étend au moins jusqu'à un niveau prédéterminé (111), la fosse à fumier comprenant en outre un dispositif d'entraînement (171, 172) pour entraîner un flux dans la couche de liquide de transport (110) dans la fosse à fumier, et un dispositif de décharge (140) pour décharger dans le passage de transfert (106, 190) les parties de fumier suspendues et/ou flottantes dans le liquide de transport (110), comprenant en outre une alimentation en liquide (109) pour alimenter en liquide de transport (110) la fosse à fumier et des moyens pour déterminer si la couche de liquide de transport (110) dans la fosse à fumier s'étend sensiblement jusqu'au niveau prédéterminé (111), l'alimentation en liquide (109) étant conçue pour alimenter en liquide de transport (110) la fosse à fumier lorsqu'il a été déterminé que le niveau de liquide de transport (111) ne s'étend sensiblement pas jusqu'au niveau prédéterminé (111).

2. Installation pour animaux (100, 160) selon la revendication 1, dans laquelle le dispositif d'entraînement (171, 172) comprend une conduite de fluide de transport (120) dotée de perforations qui débouchent dans la fosse à fumier sous le niveau prédéterminé (111).

3. Installation pour animaux (100, 160) selon la revendication 1 ou 2, dans laquelle le dispositif d'entraînement (171, 172) est conçu pour faire circuler le liquide de transport dans la fosse à fumier.

4. Installation pour animaux (100, 160) selon l'une quelconque des revendications précédentes, dans laquelle le niveau prédéterminé (111) s'étend sensiblement jusqu'à la partie inférieure du passage de transfert (106, 190).

5. Installation pour animaux (100, 160) selon l'une quelconque des revendications précédentes, dans laquelle le niveau prédéterminé (111) est suffisant pour permettre un flux du liquide de transport à travers sensiblement toute la fosse à fumier.

6. Installation pour animaux (100, 160) selon l'une quelconque des revendications précédentes, dans laquelle le dispositif de décharge (140) est pourvu de perforations permettant le passage du liquide de transport.

7. Installation pour animaux (100, 160) selon la revendication 6, dans laquelle le dispositif de décharge (140) comprend un tambour ou une lame placé(e) dans la fosse à fumier et possédant une surface pourvue de perforations perméables aux liquides, le tambour ou la lame étant conçue pour se déplacer d'une position dans laquelle la surface se trouve au moins partiellement sous le niveau du liquide de transport (111), à une position dans laquelle la surface se trouve au moins partiellement au-dessus du niveau de liquide de transport (111) en vue de déplacer le fumier flottant et/ou suspendu par le biais de la surface à un niveau au-dessus du niveau de liquide de transport (111).

8. Installation pour animaux (100, 160) selon la revendication 7, dans laquelle le tambour ou la lame est conçu(e) pour tourner autour d'un axe sensiblement horizontal.

9. Installation pour animaux (100, 160) selon la revendication 6, dans laquelle le dispositif de décharge (140) comprend un déflecteur qui est pourvu de perforations (121, 141) et qui s'étend obliquement dans la direction longitudinale par rapport au sens d'écoulement du liquide de transport, le déflecteur comprenant une première extrémité distale extérieure placée sensiblement en butée contre le passage de transfert (106, 190) et une seconde extrémité distale extérieure placée en amont par rapport à la première extrémité distale extérieure, le déflecteur présentant un bord inférieur au-dessous du niveau prédéterminé (111) et un bord supérieur au-dessus du niveau prédéterminé (111).

10. Installation pour animaux (100, 160) selon la revendication 9, dans laquelle la seconde extrémité distale extérieure bute contre une paroi située à l'opposé au passage de transfert (106, 190).

11. Installation pour animaux (100, 160) selon la revendication 9 ou 10, dans laquelle le bord inférieur du déflecteur est placé en amont du bord supérieur du déflecteur.

12. Installation pour animaux (100, 160) selon l'une quelconque des revendications précédentes, laquelle comprend en outre des moyens de dosage pour ajouter au liquide de transport une substance réduisant le pH.

13. Installation pour animaux (100, 160) selon l'une quelconque des revendications 1 à 12, laquelle est munie d'un séparateur de fumier comprenant un boîtier avec une paroi intérieure conique et une vis sans fin conique rotative (502) placée dedans, la paroi interne conique étant pourvue de perforations permettant le passage des parties liquides du fumier et la vis sans fin conique (502) est adaptée pour transporter durant la rotation des parties solides du fumier solide depuis l'ouverture d'entrée vers une ouverture de sortie, l'ouverture d'entrée présentant un diamètre plus grand que l'ouverture de sortie, et la vis sans fin conique (502) s'effile vers l'ouverture de sortie, l'ouverture d'entrée du séparateur de fumier étant reliée au passage de transfert (106, 190).
